(19) Europäisches Patentamt
European Patent Office
Office européen des brevets

(11) Veröffentlichungsnummer: **0 269 835 B1**

(12) # EUROPÄISCHE PATENTSCHRIFT

(45) Veröffentlichungstag der Patentschrift: **18.09.91**

(51) Int. Cl.⁵: **F16D 35/00**, F16D 1/06

(21) Anmeldenummer: **87115549.5**

(22) Anmeldetag: **23.10.87**

(54) **Kupplung, insbesondere Flüssigkeitsreibungskupplung.**

(30) Priorität: **28.11.86 DE 3640776**

(43) Veröffentlichungstag der Anmeldung:
**08.06.88 Patentblatt 88/23**

(45) Bekanntmachung des Hinweises auf die
Patenterteilung:
**18.09.91 Patentblatt 91/38**

(84) Benannte Vertragsstaaten:
**DE ES FR GB IT SE**

(56) Entgegenhaltungen:
**DE-A- 1 905 354**
**FR-A- 2 163 143**
**FR-A- 2 580 341**
**US-A- 4 051 936**

(73) Patentinhaber: **Behr GmbH & Co.**
**Mauserstrasse 3**
**W-7000 Stuttgart 30(DE)**

(72) Erfinder: **Digele, Jörg, Dipl.-Ing. (FH)**
**Weinstrasse 48**
**W-7149 Freiberg(DE)**

(74) Vertreter: **Wilhelm, Hans-Herbert, Dr.-Ing. et al**
**Wilhelm & Dauster Patentanwälte Hospital-**
**strasse 8**
**W-7000 Stuttgart 1(DE)**

**Beschreibung**

Die Erfindung betrifft eine Flüssigkeitsreibungskupplung nach dem Oberbegriff des Patentanspruches 1.

Solche Kupplungen sind bekannt (z.B. US-A-4 051 936). Bei diesen Bauarten wird die Primärscheibe mit einem Zapfen der Antriebswelle auf herkömmliche Weise fest verbunden. Dieser Zapfen geht in einen, beispielsweise an die Kurbelwelle eines Motors ansetzbaren Flansch über. Die getrennte Ausbildung von Primärscheibe und Antriebswelle wird zum einen deshalb gewählt, weil die Primärscheibe wegen des Umlaufens in dem mit Flüssigkeit gefüllten Arbeitsraum der Flüssigkeitsreibungskupplung stark erwärmt wird und daher zweckmäßigerweise aus dem gleichen Material hergestellt wird, wie das umlaufende Kupplungsgehäuse mit den daran befestigten Lüfterschaufeln. Da dieses Kupplungsgehäuse in der Regel unmittelbar auf der Antriebswelle gelagert ist, wird die zweiteilige Ausbildung auch aus Montagegründen vorgenommen. Ein gewisser Nachteil ist dabei, daß die Primärscheibe bei der Montage durch einen gesonderten Arbeitsgang an der Antriebswelle, beispielsweise durch Schrauben, befestigt werden muß. Die Montage wird dadurch relativ aufwendig.

Es ist bekannt (FR-A-25 80 341), zur mechanischen Verbindung eines Zahnrades mit einer angetriebenen Welle das Zahnrad aus einem festeren Material als die Welle herzustellen und die Nabe des Zahnrades mit einer Innenverzahnung zu versehen. Diese Innenverzahnung wirkt dann, wenn die Welle axial in diese Verzahnung gepreßt wird, wie ein Werkzeug und erzeugt auf der Welle eine korrespondierende Außenverzahnung, die die Drehverbindung sichert. Die Axialsicherung wird dort durch die vom Umfang der Welle hochgeschobenen Späne bewirkt, die in eine Ringkammer in der Nabe des Zahnrades eindringen.

Bei dieser Bauart wird das aus einem härteren Material als die Antriebswelle bestehende Zahnrad durch das Aufschieben auf der Antriebswelle zentriert. Bei einer Flüssigkeitsreibungskupplung läßt sich eine solche Zentrierung der Primärscheibe auf der Antriebswelle nicht verwirklichen, weil hier die Antriebswelle auch als Lagerteil für das Kupplungsgehäuse dient und aus dem festeren Material als Primärscheibe und Kupplungsgehäuse bestehen muß. Die Antriebswelle müßte daher, wenn die Verbindungstechnik nach der FR-A 25 80 341 gewählt werden soll, den Außenteil bilden, wenn - durch Wärmeausdehnungen bedingt - ein Lockern des Sitzes der Primärscheibe an der Antriebswelle verhindert werden soll.

Der Erfindung liegt daher die Aufgabe zugrunde, die Antriebswelle mit der Primärscheibe so zu verbinden, daß ohne einen zusätzlichen Arbeitsschritt eine feste und spielfreie Verbindung zwischen Primärscheibe und Antriebswelle erreicht wird und gleichzeitig aber die notwendige Zentrierung der Primärscheibe an der Antriebswelle gewährleistet wird.

Zur Lösung dieser Aufgabe werden bei einer Kupplung der eingangs genannten Art die kennzeichnenden Merkmale des Patentanspruches 1 vorgesehen. Durch diese Ausgestaltung wird gleichzeitig mit dem Ansetzen der Primärscheibe an der Antriebswelle die form- und kraftschlüssige Verbindung zwischen Primärscheibe und Antriebswelle und die notwendige Zentrierung hergestellt. Das axiale Andrücken der Primärscheibe bewirkt gleichzeitig die zerspanende Verformung des Verbindungszapfens an der Primärscheibe. Die Antriebswelle dient daher - wie das an sich bekannt ist - als ein Verformungswerkzeug für das korrespondierende Teil der Primärscheibe. Auf diese Weise wird ein spielfreier und zentrischer Sitz der beiden miteinander zu verbindenden Teile gewährleistet. Zusätzlich werden die Wärmedehnungseigenschaften der verwendeten Materialen ausgenützt, um diesen Sitz auch während des Betriebes der Kupplung aufrechtzuerhalten. Wenn, in üblicher Weise, die Primärscheibe aus Aluminium hergestellt wird und die Antriebswelle aus Stahl, so bewirken die unterschiedlichen Dehnungseigenschaften dieser beiden Materialien auch, daß sich bei einer Erwärmung der Primärscheibe im Betrieb der Kupplung die Verzahnung nur noch inniger ineinanderfügt. Das Auftreten von Spiel wird dadurch ausgeschlossen.

Durch die neue Ausgestaltung kann bei der Montage auch der Lagerinnenring für das das Kupplungsgehäuse tragende Kugellager mit fixiert werden, ohne daß dafür ein gesonderter Arbeitsgang notwendig wäre.

Vorteilhafte Weiterbildungen der Erfindung sind in den Unteransprüchen gekennzeichnet. Die Ansprüche 4 und 5 enthalten dabei Merkmale, durch die in sehr einfacher Weise auch die Axialsicherung der ineinandergefügten Teile gewährleistet ist.

Die Erfindung ist in der Zeichnung anhand eines Ausführungsbeispieles dargestellt und wird im folgenden erläutert. Es zeigen:

Fig. 1 einen schematischen Längsschnitt durch eine erfindungsgemäß ausgestaltete Flüssigkeitsreibungskupplung für den Antrieb eines Lüfters für einen Kraftfahrzeugmotor,

Fig. 2 die vergrößerte Detaildarstellung des ineinandergreifenden Bereiches der Primärscheibe und des mit ihr verbundenen Antriebszapfens der Fig. 1,

Fig. 3 die Schnittdarstellung ähnlich Fig. 2 jedoch ohne die eingeschobene Primärscheibe und in einem durch die Spitze eines Zahnes verlaufenden Schnitt und

Fig. 4    die Teilansicht der Verzahnung der Fig. 3 in Richtung der Schnittlinie IV-IV.

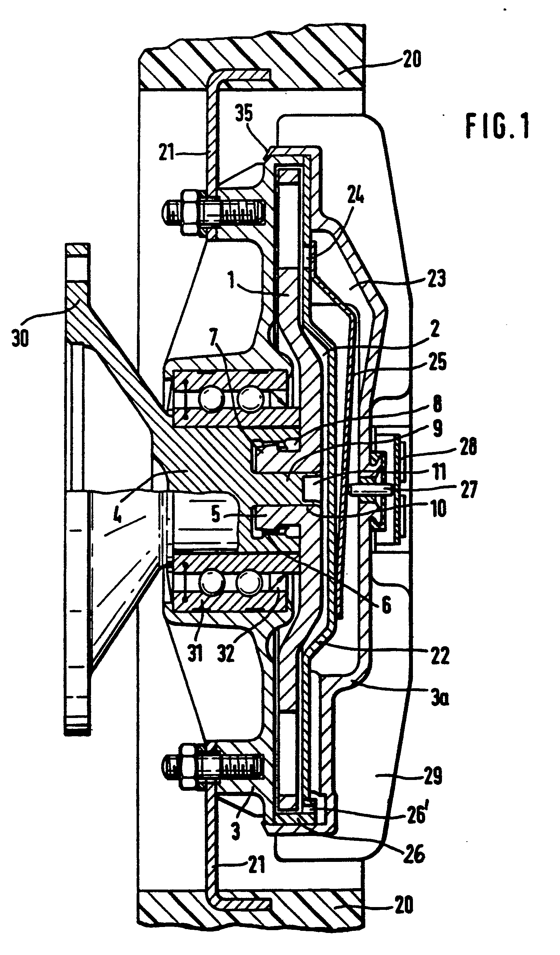

In der Fig. 1 ist eine Flüssigkeitsreibungskupplung für den Lüfter eines Kraftfahrzeugkühlers gezeigt, dessen Lüfterschaufeln (20) über radial nach innen ragende Stege (21) fest mit entsprechenden Anschlußstutzen eines Gehäuses (3) verschraubt sind, das beim Ausführungsbeispiel aus Aluminium besteht. Das Gehäuse (3) ist durch einen Deckel (3a) abgeschlossen und durch eine Trennwand (22) in eine Arbeitskammer (2) und in eine Vorratskammer (23) unterteilt. Sowohl in der Arbeitskammer (2) als auch in der Vorratskammer (23) befindet sich eine nicht gezeigte, viskose Flüssigkeit, die in an sich bekannter Weise durch eine Öffnung (24), die von einem federnden Ventilhebel (25) freigegeben oder verschlossen wird, in die Arbeitskammer (2) übertreten kann. Der Füllungsgrad in der Arbeitskammer bestimmt den Kupplungsgrad zwischen einer rotierenden Primärscheibe (1) und dem Gehäuse (3). Die Kupplungsflüssigkeit wird, bedingt durch die Rotation, durch einen am äußeren Umfang der Arbeitskammer (2) vorgesehenen Staukörper (26) mit einer Rücklaufbohrung (26') wieder in die Vorratskammer (23) zurückgefördert. In Abhängigkeit von der Freigabe der Öffnung (24) durch den Ventilhebel (25) bestimmt sich die im Kreislauf geförderte Flüssigkeitsmenge durch die Kupplung.

Der Ventilhebel (25) wird über einen zentral im Deckel (3a) vorgesehenen Stift (27) beaufschlagt, der seinerseits an einem Bimetallstreifen (28) anliegt, der mit seinen Enden fest am Deckel (3a), beispielsweise unterhalb von Aussparungen an den etwa radial verlaufenden Kühlrippen (29), gehalten ist.

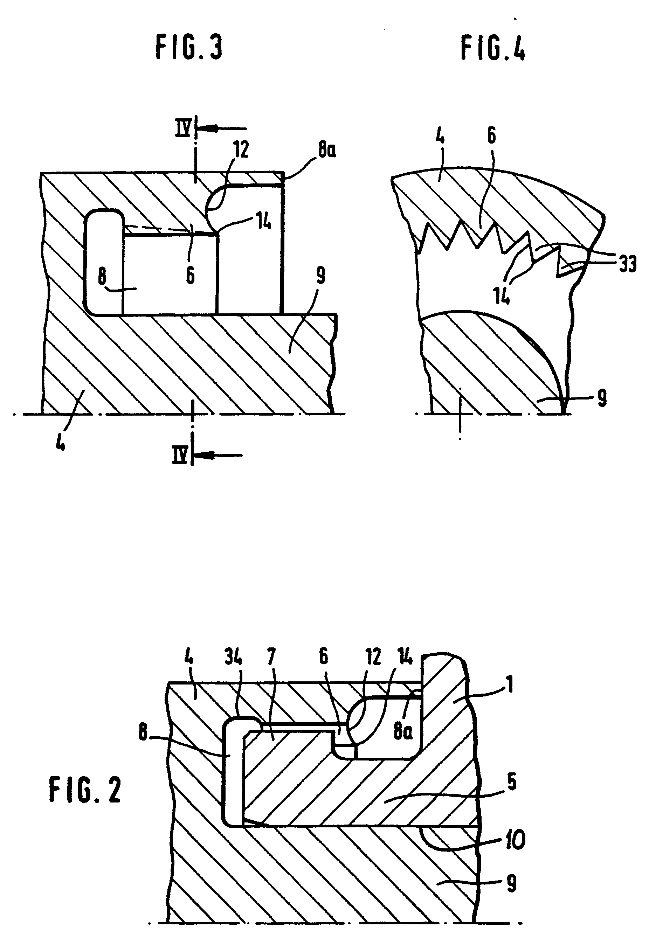

Die Primärscheibe (1) ist beim Ausführungsbeispiel über einen zentralen Zapfen (5), der axial von ihr absteht, fest mit einer zapfenförmigen Antriebswelle (4) verbunden, die mit einem Flansch (30) unmittelbar an die Kurbelwelle des Kraftfahrzeugmotors angekuppelt werden kann. Der Zapfen (5), der ebenso wie die Primärscheibe (1) und das Gehäuse (3) mit dem Deckel (3a) aus Aluminium besteht, ist mit einem Kopf (7) größeren Durchmesser axial in eine in der zapfenförmigen Antriebswelle (4) vorgesehene Ausnehmung (8) eingeschoben, die mit einer umlaufenden Innenkerbverzahnung (6) versehen ist. Der Rand (8a) der Ausnehmung (8) (siehe Fig. 2) dient als Axialanschlag zur Lagensicherung der Primärscheibe (1). Beim Ausführungsbeispiel ist die Ausnehmung (8) ringförmig ausgebildet und verläuft um einen Zentrierzapfen (9) herum, der durch die Bohrung (10) des hohlen Zapfens (5) und durch die Primärscheibe (1) hindurchragt. Der Zentrierzapfen (9) ist an diesem freien Ende (11), das in die Primärscheibe (1) hineinragt, hohl ausgebildet. Er ist dort mit einer Sackbohrung, die etwa eine Tiefe aufweist, die der Dicke der Primärscheibe (1) entspricht, und mit einem Durchmesser versehen, der so gewählt ist, daß am freien Ende des Zentrierzapfens (9) ein Rand (11) verbleibt, der sich nach dem Einschieben des Zentrierzapfens (9) in die Bohrung (10) nach außen umbördeln oder verstemmen läßt. Die Mündung der Bohrung (10) an der Primärscheibe (1) wird zu diesem Zweck auf ihrer von der Antriebswelle (4) abgewandten Seite mit einem etwas größeren Durchmesser versehen, so daß der freie Rand (11) nach außen aufgebördelt werden kann. Auf diese Weise wird nach dem Einschieben des Zapfens (5) der Primärscheibe (1) in die Ausnehmung (8) die Axialsicherung der Primärscheibe (1) vorgenommen.

Das Gehäuse (3) ist auf der Antriebswelle (4) mit Hilfe eines Kugellagers (31) gelagert. Seine Arbeitskammer (2) ist durch eine umlaufende Dichtung (32) am Kugellager (31) und damit nach außen abgedichtet.

Aus den Fig. 2 bis 4 ergibt sich im einzelnen, wie der Kraft und Formschluß zwischen den Zapfen (5) der Primärscheibe (1) und der Kerbverzahnung (6) der Antriebswelle (4) erfolgt. Die Fig. 3 und 4 lassen deutlich werden, daß die in die ringförmige Ausnehmung (8) hereinragende Innenkerbverzahnung (6) mit Zähnen (33) mit üblichem Querschnitt versehen ist. Diese Kerbverzahnung (6) bildet so einen umlaufenden Ring, der auf der nach außen weisenden, also zum freien Rand (8a) der Ausnehmung (8) gerichteten Seite, mit einer Auskehlung (12) versehen ist, die den einzelnen Zähnen (33) nach außen gerichtete Schneidkanten (14) verleiht. Hinter der Kerbverzahnung (6) weist die Ausnehmung (8) einen Hinterschnitt (34) mit größerem Durchmesser auf. Die Kerbverzahnung (6) bildet auf diese Weise ein Schneidwerkzeug, das beim axialen Aufschieben des Zapfens (5) der Primärscheibe (1) dafür sorgt, daß der Kopf (7) größeren Durchmessers am freien Ende des Zapfens (5) spanend verformt wird und sich passend in die Kerbverzahnung (6) hereindrückt, bis der Rand (8a) der Ausnehmung (8) an der Primärscheibe (1) anliegt. Nach dem Umbördeln des freien Randes (11) des Zentrierzapfens (9) ist die Verbindung zwischen Primärscheibe (1) und Antriebswelle (4) hergestellt. Diese Wellen/Nabenverbindung ist spielfrei. Sie kann auch durch Temperatureinflüsse kein Spiel erhalten. Der Ausdehnungskoeffizient des Aluminiums, aus dem die Primärscheibe (1) mit dem Zapfen (5) hergestellt ist, ist größer als jener von Stahl, aus dem die Antriebswelle (4) hergestellt ist. Mit zunehmender Temperatur wird sich daher eine innigere Verklemmung der Verzahnung ergeben.

Ehe die Primärscheibe (1) beim Ausführungsbeispiel in die Ausnehmung (8) der Antriebswelle (4) eingeschoben wird, wird, wie aus Fig. 1 ohne weiteres deutlich wird, das Gehäuse (3) mit dem Kugellager (31) auf die zapfenförmige Antriebswelle (4) aufgesetzt. Der Innenring des Kugellagers (31) wird mit dem Aufschieben der Primärscheibe (1) in seiner Lage gesichert. Dies kann durch entsprechende Anpassung der Abmessung erreicht werden. Nach dem Aufschieben der Primärscheibe (1) wird die Trennwand (22) durch Aufsetzen des Deckels (3a) angebaut. Auch der Deckel (3a) kann durch Umbördeln seines Außenrandes (35) über das Gehäuse (3) ohne eine Verschraubung gesichert werden.

## Patentansprüche

1. Flüssigkeitsreibungskupplung,die mit einer Primärscheibe (1) versehen ist, die in einer flüssigkeitsgefüllten Arbeitskammer (2) eines den Sekundärteil bildenden Gehäuses (3) umläuft und axial und in Drehrichtung fest mit einer Antriebswelle (4) verbunden ist, dadurch gekennzeichnet, daß die Primärscheibe (1) aus einem weicheren Material als die Antriebswelle (4) besteht und mit einem von ihrem Zentrum axial abragenden hohlen Zapfen (5) versehen ist, der mit einem an seinem freien Ende vorgesehenen Kopf (7) größeren Durchmessers unter spanender Verformung in eine in einer zentralen Ausnehmung (8) der Antriebswelle (4) vorgesehene, als Kerbverzahnung ausgebildete Innenverzahnung (6) eingepreßt und so über einen in der zentralen Ausnehmung (8) vorgesehenen Zentrierzapfen (9) der Antriebswelle (4) geschoben ist, daß der Zentrierzapfen durch die Bohrung des hohlen Zapfens (5) und durch die Primärscheibe (1) hindurchragt.

2. Kupplung nach Anspruch 1, dadurch gekennzeichnet, daß der Rand (8a) der Ausnehmung (8) als Axialanschlag für die Primärscheibe (1) dient.

3. Kupplung nach Anspruch 1 oder 2, dadurch gekennzeichnet, daß der Zentrierzapfen (9) mit seinem freien, durch die Primärscheibe (1) hindurchragenden Ende (11) an der Primärscheibe (1) zur Axiallagensicherung verstemmt ist.

4. Kupplung nach einem der Ansprüche 1 bis 3, dadurch gekennzeichnet, daß das freie Ende des Zentrierzapfens (9) hohl und mit einem zum Aufbördeln gegen die Primärscheibe (1) geeigneten Rand (11) ausgebildet ist.

5. Kupplung nach Anspruch 1, dadurch gekennzeichnet, daß die Innenverzahnung (6) auf der zur Mündung der Ausnehmung (8) weisenden Seite mit einer Auskehlung (12) versehen ist.

6. Kupplung nach Anspruch 5, dadurch gekennzeichnet, daß an der Auskehlung (12) zur offenen Seite der Ausnehmung (8) gerichtete Schneidkanten (14) gebildet sind.

7. Kupplung nach einem der Ansprüche 1 bis 6, dadurch gekennzeichnet, daß die Primärscheibe (1) aus Aluminium und die Antriebswelle (4) aus Stahl hergestellt ist.

## Claims

1. A fluid friction clutch provided with a primary disc (1) which rotates in a fluid-filled working chamber (2) of a housing (3) which forms the secondary part and which is axially and in the direction of rotation rigidly connected to a drive shaft (4), characterised in that the primary disc (1) consists of a softer material than the drive shaft (4) and is provided with a hollow journal (5) projecting axially from its centre which is provided with a larger diameter head (7) which, while being cut to shape, is forced into an internally cut tooth system (6) constructed in a central recess (8) in the drive shaft (4) and is thus pushed over a centring journal (9) on the drive shaft (4) which is provided in the central recess (8) and in that the centring journal projects through the bore in the hollow journal (5) and through the primary disc (1).

2. A clutch according to Claim 1, characterised in that the edge (8a) of the recess (8) serves as an axial abutment for the primary disc (1).

3. A clutch according to Claim 1 or 2, characterised in that the free end of the centring journal (9) which protrudes through the primary disc (1) is caulked on the primary disc (1) to secure the axial position.

4. A clutch according to one of Claims 1 to 3, characterised in that the free end of the centring journal (9) is hollow and is constructed with an edge (11) which is suitable for being flanged over against the primary disc (1).

5. A clutch according to Claim 1, characterised in that on the side facing the mouth of the recess (8), the internally cut tooth system (6) is provided with a groove (12).

6. A clutch according to Claim 5, characterised in that on the groove (12) there are formed cutting edges (14) which are directed towards the open side of the recess (8).

7. A clutch according to one of Claims 1 to 6, characterised in that the primary disc (1) is produced from aluminium while the drive shaft (4) is produced from steel.

**.Revendications**

1. Accouplement à frottement visqueux, qui est pourvu d'un disque primaire (1), qui tourne dans une chambre de travail (2), remplie de liquide, d'un corps (3) formant la partie secondaire et qui est relié solidement, axialement et angulairement, avec un arbre d'entraînement (4), caractérisé en ce que le disque primaire (1 est constitué d'un matériau moins résistant que l'arbre d'entraînement (4) et est pourvu d'un tourillon creux (5) faisant saillie axialement de son centre et qui est emmanché, par une tête (7) de plus grand diamètre, prévue à son extrémité libre, avec déformation par enlèvement de copeaux, dans une denture intérieure (6), agencée comme une denture d'encochage et prévue dans un évidement central (8) de l'arbre d'entraînement (4), le tourillon étant ainsi engagé sur un têton de centrage (9) de l'arbre d'entraînement (4), prévu dans l'évidement central (8), de telle sorte que ce têton de centrage passe à travers le trou du tourillon creux (5) et à travers le disque primaire (1).

2. Accouplement selon la revendication 1, caractérisé en ce que le bord (8a) de l'évidement (8) sert de butée axiale pour le disque primaire (1).

3. Accouplement selon la revendication 1 ou 2, caractérisé en ce que l'extrémité libre (11) du têton de centrage (9) qui traverse le disque primaire (1) est matée contre le disque primaire (1) pour un blocage en position axiale.

4. Accouplement selon la revendication 1 à 3, caractérisé en ce que l'extrémité libre du têton de centrage (9) est réalisée creuse et est pourvue d'un bord (11) approprié pour être rabattu contre le disque primaire (1).

5. Accouplement selon la revendication 1, caractérisé en ce que la denture intérieure (6) est pourvue d'un décrochement (12) sur le côté dirigé vers l'embouchure de l'évidement (8).

6. Accouplement selon la revendication 5, caractérisé en ce que sur le décrochement (12) sont créées des arêtes de coupe (14) dirigées vers le côté ouvert de l'évidement (8).

7. Accouplement selon une des revendications 1 à 6, caractérisé en ce que le disque primaire (1) est fabriqué en aluminium et l'arbre d'entraînement (4) en acier.

FIG.1

FIG.3

FIG.4

FIG.2